# EUROPEAN PATENT APPLICATION

(11) **EP 2 611 188 A2**
(43) Date of publication of application: **03.07.2013**
(21) Application number: 12186952.3
(22) Date of filing: 02.10.2012
(51) Int. Cl.: H04N 21/231, H04N 21/2343

(54) **Device for providing a real-time live video data stream file and method thereof**

(30) Priority: 30.12.2011 TW 100149958
(71) Applicant: AmTRAN Technology Co., Ltd., New Taipei City 23553 (TW)
(72) Inventor: Tseng, Chiung-Wen, 23553 New Taipei City (TW); Chen, Yu-Jen, 23553 New Taipei City (TW); Wei, Wen-Kang, 23553 New Taipei City (TW)
(74) Representative: Becker Kurig Straus

(57) **Abstract**

A device (100, 200) providing a real-time live video data stream file includes a memory (104), a processor (106), and a buffer (108). The memory (104) stores a first video file (1042). The processor (106) is used for receiving a first access command generated by a Universal Plug and Play client device (112) for accessing the first video file (1042), and converting an original real-time video data stream to a real-time video data stream file with a predetermined format according to the first access command. The buffer (108) is used for storing the real-time video data stream file temporarily. Therefore, the real-time video data stream file stored in the buffer (108) can be accessed and played by the Universal Plug and Play client device (112).

## Description

### Field of the Invention

The present invention relates to a device for providing a real-time live video data stream file and method thereof according to the pre-characterizing clauses of claims 1 and 7.

### Background of the Invention

In the Internet, a server generally utilizes a Real-time Transport Protocol (RTP) to transmit a real-time multimedia data stream to a client device, where the real-time transport protocol includes a transport protocol and a Real-time Transport Control Protocol (RTCP), where the transport protocol is used for transmitting the real-time multimedia data stream, and the Real-time Transport Control Protocol is used for transmitting a transmission condition of the Internet to adjust a compression ratio of the real-time multimedia data stream or acts as an adjustment principle of Quality of Service (QoS) of the Internet.

A Digital Living Network Alliance integrates multimedia data into a Universal Plug and Play (UPnP) technology, where the Digital Living Network Alliance can support a HyperText Transfer Protocol (HTTP) in transmission of the multimedia data. The Digital Living Network Alliance is mainly applied to sharing and playback of home digital multimedia files. For example, when a television acts as a Digital Media Renderer (DMR), the television can search a home computer which acts as a Digital Media Server (DMS) on the same local area network. Then, the television can access multimedia files stored in the home computer through the HyperText Transfer Protocol, and display the accessed multimedia files. The Digital Living Network Alliance is a common industry standard mainly established by several consumer electronic and information technology companies, where the Digital Living Network Alliance can support a Plug and Play function of consumer electronics products. Thus, consumer electronics products which support the Digital Living Network Alliance can transmit multimedia files through a local area network without predetermined application programs. However, in the Digital Living Network Alliance, a server can only transmit present multimedia files stored in the server to a client device; it can not transmit a real-time multimedia data stream to the client device.

Although the Digital Living Network Alliance can support the Plug and Play function of consumer electronic products, the server can only transmit present multimedia files stored in the server to the client device under a specification of the Digital Living Network Alliance, so practicality of the Digital Living Network Alliance is decreased.

### Summary of the Invention

This in mind, the present invention aims at providing a device for providing a real-time live video data stream file and a method thereof that can utilize a video file which is a fake non-real-time multimedia file to provide a real-time live video data stream file.

This is achieved by a device for providing a real-time live video data stream file and a method thereof according to claims 1 and 7. The dependent claims pertain to corresponding further developments and improvements.

As will be seen more clearly from the detailed description following below, the claimed device for providing a real-time live video data stream file includes a memory, a processor, and a buffer. The memory is used for storing a first video file. The processor is used for receiving a first access command generated by the Universal Plug and Play client device for accessing the first video file, and converting an original real-time video data stream to a real-time video data stream file with a predetermined format according to the first access command. The buffer is used for storing the real-time video data stream file temporarily, wherein the real-time video data stream file stored in the buffer is provided to the Universal Plug and Play client device to access and play.

### Brief Description of the Drawings

In the following, the invention is further illustrated by way of example, taking reference to the accompanying drawings thereof:
FIG. 1 is a diagram illustrating a device for providing a real-time live video data stream file according to an embodiment,
FIG. 2 is a diagram illustrating a device for providing a real-time live video data stream file according to another embodiment,
FIG. 3 is a flowchart illustrating a method for providing a real-time live video data stream file according to another embodiment, and
FIG. 4 is a flowchart illustrating a method for providing a real-time live video data stream file according to another embodiment.

### Detailed Description

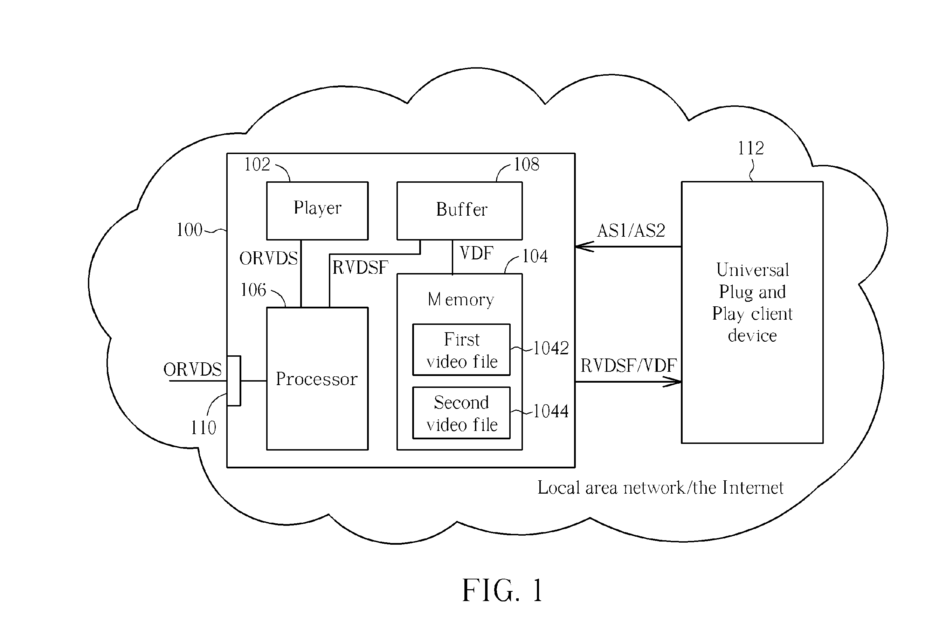

Please refer to FIG. 1. FIG. 1 is a diagram illustrating a device 100 for providing a real-time live video data stream file according to an embodiment. As shown in FIG. 1, the device 100 includes a memory 104, a processor 106, a buffer 108, and a tuner 110, where the device 100 can be a television and the device 100 is a device which belongs to a Digital Living Network Alliance (DLNA), but the present invention is not limited to the device 100 being a television. The processor 106 receives an original real-time video data stream (ORVDS) through the tuner 110. In another embodiment of the present invention, the processor 106 receives the ORVDS through a High-Definition Multimedia Interface (HDMI), a Universal Serial Bus (USB), or another video input port further included by the device 100. In addition, a player 102 further included by the device 100 is coupled to the processor 106 for playing the ORVDS. The memory 104 stores a first video file 1042 and a second video file 1044, where the second video file 1044 is a non-real-time multimedia file, and the first video file 1042 is a fake non-real-time multimedia file, but the present invention is not limited to the memory 104 only storing one second video file 1044. Thus, the memory 104 can store a plurality of second video files. As shown in FIG. 1, the processor 106 can broadcast a name and/or service items of the device 100, or names, sizes, and/or contents of the first video file 1042 and the second video file 1044 on a local area network or the Internet. After a user utilizes a UPnP client device 112 to search the device 100 on the local area network or the Internet, the user can utilize the UPnP client device 112 to generate a first access command AS1 for accessing the first video file 1042, or a second access command AS2 for accessing the second video file 1044. For example, after the user searches the device 100 through the UPnP client device 112 on the local area network or the Internet, the user can utilize a mouse to click an icon of the first video file 1042 of the device 100 displayed by the UPnP client device 112 to generate the first access command AS1 for accessing the first video file 1042, or utilize the mouse to click an icon of the second video file 1044 of the device 100 displayed by the UPnP client device 112 to generate the second access command AS2 for accessing the second video file 1044. But, the present invention is not limited to the user utilizing the mouse to click the icon of the first video file 1042 of the device 100 displayed by the UPnP client device 112 to generate the first access command AS1 for accessing first video file 1042, or utilizing the mouse to click the icon of the second video file 1044 of the device 100 displayed by the UPnP client device 112 to generate the second access command AS2 for accessing the second video file 1044. In addition, the UPnP client device 112 can be one of a tablet personal computer, a smart phone, a personal digital assistant, and a notebook computer which support the Digital Living Network Alliance, and the UPnP client device 112 can transmit the first access command AS1 or the second access command AS2 to the device 100 through a transmission line or a wireless network. When the user utilizes the UPnP client device 112 to generate the first access command AS1 for accessing the first video file 1042, the processor 106 can convert the ORVDS displayed by the player 102 to a real-time video data stream file (RVDSF) with a predetermined format according to the first access command AS1, and transmit the RVDSF to the buffer 108, where the predetermined format can be an H.264 format, but the present invention is not limited to the predetermined format being the H.264 format. Meanwhile, the buffer 108 is used for storing the RVDSF temporarily. Then, the UPnP client device 112 can access and play the RVDSF stored in the buffer 108 through the transmission line or the wireless network, where the UPnP client device 112 accesses the RVDSF stored in the buffer 108 through a HTTP. Therefore, although the UPnP client device 112 generates the first access command AS1 for accessing the first video file 1042, the UPnP client device 112 can continuously access the RVDSF to play the RVDSF through the buffer 108. Because the first video file 1042 does not store the RVDSF, size of the first video file 1042 does not increase with time. In addition, the name, the size, and the contents of the first video file 1042 can be relevant or irrelevant to the RVDS.

As shown in FIG. 1, when the user utilizes the UPnP client device 112 to generate the second access command AS2 for accessing the second video file 1044, the processor 106 can transmit a video data file (VDF) of the second video file 1044 to the buffer 108 according to the second access command AS2. Meanwhile, the buffer 108 is used for storing the VDF of the second video file 1044 temporarily. Then, the UPnP client device 112 can access and play the VDF of the second video file 1044 stored in the buffer 108 through the transmission line or the wireless network, where the UPnP client device 112 accesses the VDF of the second video file 1044 stored in the buffer 108 through the HTTP. In addition, in another embodiment of the present invention, the second video file 1044 is stored in a peripheral device further included by the device 100.

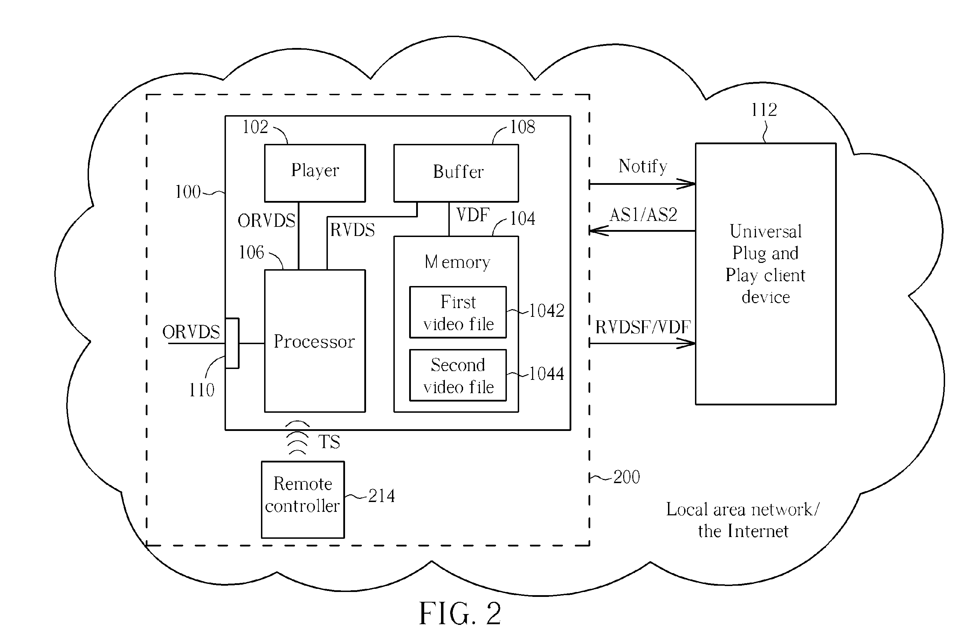

Please refer to FIG. 2. FIG. 2 is a diagram illustrating a device 200 for providing a real-time live video data stream file according to another embodiment. As shown in FIG. 2, a difference between the device 200 and the device 100 in FIG. 1 is that the device 200 further includes a remote controller 214. The remote controller 214 is used for generating and transmitting a trigger signal (TS) to the processor 106, where the processor 106 can notify the UPnP client device 112 to generate a first access command AS1 for accessing the first video file 1042 or a second access command AS2 for accessing the second video file 1044 according to the trigger signal TS. Meanwhile, as shown in FIG. 2, the device 100 acts as a Digital Media Controller (DMC) and a Digital Media Server (DMS) of the Digital Living Network Alliance, and the UPnP client device 112 acts as a Digital Media Render (DMR) of the Digital Living Network Alliance. In addition, subsequent operational principles of the device 200 are the same as those of the device 100 in FIG. 1, so further description thereof is omitted for simplicity.

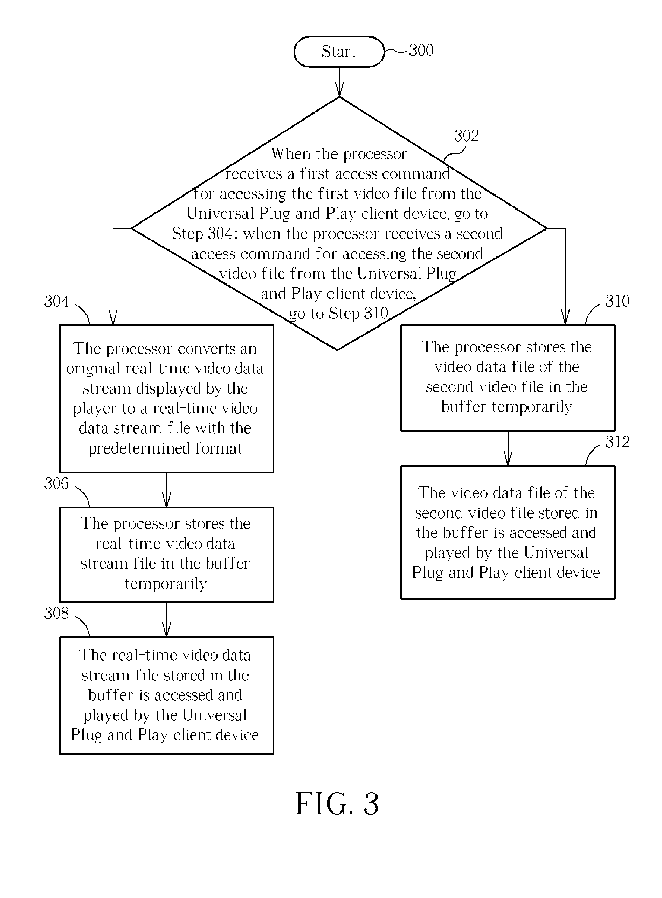

Please refer to FIG. 1 and FIG. 3. FIG. 3 is a flowchart illustrating a method for providing a real-time live video data stream file according to another embodiment. The method in FIG. 3 is illustrated using the device 100 in FIG. 1. Detailed steps are as follows.
- Step 300:: Start.
- Step 302:: When the processor 106 receives a first access command AS1 for accessing the first video file 1042 from the UPnP client device 112, go to Step 304; when the processor 106 receives a second access command AS2 for accessing the second video file 1044 from the UPnP client device 112, go to Step 310.
- Step 304:: The processor 106 converts an ORVDS displayed by the player 102 to an RVDSF with the predetermined format.
- Step 306:: The processor 106 stores the RVDSF in the buffer 108 temporarily.
- Step 308:: The RVDSF stored in the buffer 108 is accessed and played by the UPnP client device 112.
- Step 310:: The processor 106 stores the VDF of the second video file 1044 in the buffer 108 temporarily.
- Step 312:: The VDF of the second video file 1044 stored in the buffer 108 is accessed and played by the UPnP client device 112.

In Step 302, after the user utilizes the UPnP client device 112 to search the device 100 on the local area network or the Internet, the user can utilize the UPnP client device 112 to generate the first access command AS1 for accessing the first video file 1042, and the UPnP client device 112 can transmit the first access command AS1 to the device 100 through the transmission line or the wireless network. In Step 304, the processor 106 converts the ORVDS displayed by the player 102 to the RVDSF with the predetermined format according to the first access command AS1, where the predetermined format can be the H.264 format, and the name, the size, and the contents of the first video file 1042 can be relevant or irrelevant to the RVDS. In Step 308, the UPnP client device 112 can access and play the RVDSF stored in the buffer 108 through the transmission line or the wireless network, where the UPnP client device 112 accesses the RVDSF stored in the buffer 108 through the HTTP. Therefore, although the UPnP client device 112 generates the first access command AS1 for accessing the first video file 1042, in fact, the UPnP client device 112 can continuously access the RVDSF to play the RVDSF through the buffer 108. Because the first video file 1042 does not store the RVDSF, the size of the first video file 1042 does not increase with time.

In Step 302, after the user utilizes the UPnP client device 112 to search the device 100 on the local area network or the Internet, the user can utilize UPnP client device 112 to generate the second access command AS2 for accessing the second video file 1044, and the UPnP client device 112 can transmit the second access command AS2 to the device 100 through the transmission line or the wireless network. In Step 310, the processor 106 can transmit the VDF of the second video file 1044 to the buffer 108 according to the second access command AS2. Meanwhile, the buffer 108 can store the VDF of the second video file 1044 temporarily. In Step 312, the UPnP client device 112 can access and play the VDF of the second video file 1044 stored in the buffer 108 through the transmission line or the wireless network, where the UPnP client device 112 accesses the VDF of the second video file 1044 stored in the buffer 108 through the HTTP.

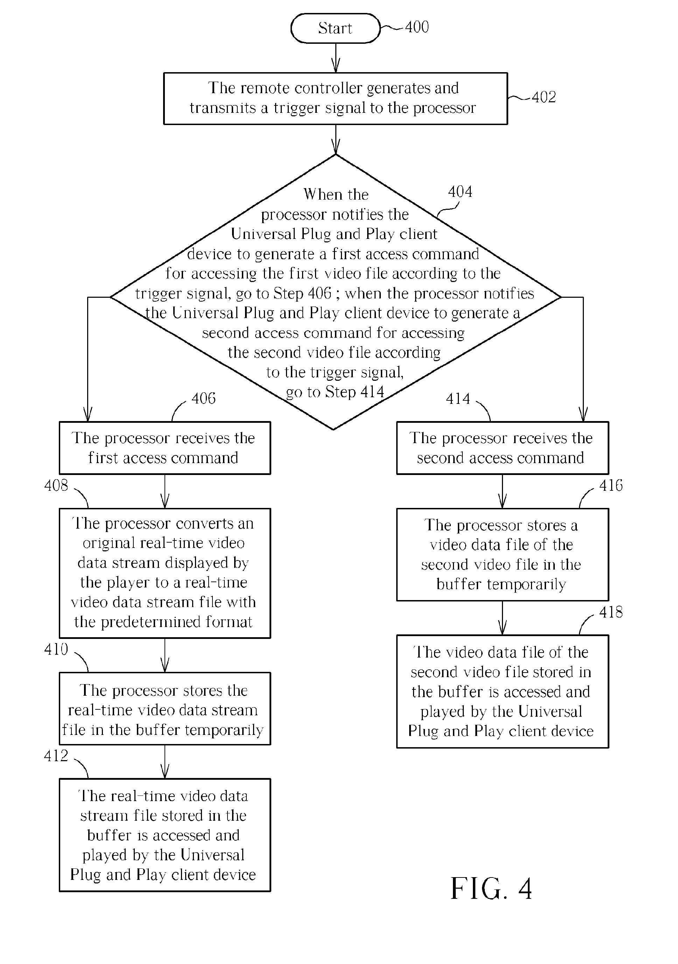

Please refer to FIG. 2 and FIG. 4. FIG. 4 is a flowchart illustrating a method for providing a real-time live video data stream file according to another embodiment. The method in FIG. 4 is illustrated using the device 200 in FIG. 2. Detailed steps are as follows.
- Step 400:: Start.
- Step 402:: The remote controller 214 generates and transmits a TS to the processor 106.
- Step 404:: When the processor 106 notifies the UPnP client device 112 to generate a first access command AS1 for accessing the first video file 1042 according to the TS, go to Step 406; when the processor 106 notifies the UPnP client device 112 to generate a second access command AS2 for accessing the second video file 1044 according to the TS, go to Step 414.
- Step 406:: The processor 106 receives the first access command AS1.
- Step 408:: The processor 106 converts an ORVDS displayed by the player 102 to an RVDSF with the predetermined format.
- Step 410:: The processor 106 stores the RVDSF in the buffer 108 temporarily.
- Step 412:: The RVDSF stored in the buffer 108 is accessed and played by the UPnP client device 112.
- Step 414:: The processor 106 receives the second access command AS2.
- Step 416:: The processor 106 stores a VDF of the second video file 1044 in the buffer 108 temporarily.
- Step 418:: The VDF of the second video file 1044 stored in the buffer 108 is accessed and played by the UPnP client device 112.

A difference between the embodiment in FIG. 4 and the embodiment in FIG. 3 is that in Step 402, the user utilizes the remote controller 214 to generate and transmit the TS to the processor 106; in Step 404, the processor 106 notifies the UPnP client device 112 to generate the first access command AS1 for accessing the first video file 1042, or the second access command AS2 for accessing the second video file 1044 according to the TS. In addition, subsequent operational principles of the embodiment in FIG. 4 are the same as those of the embodiment in FIG. 3, so further description thereof is omitted for simplicity.

To sum up, the device for providing a real-time live video data stream file and the method for providing a real-time live video data stream file utilize a first video file which is a fake non-real-time multimedia file to provide a real-time live video data stream file to the UPnP client device under a specification of the Digital Living Network Alliance. Thus, the present invention not only can increase willingness of the user to utilize consumer electronic products which support the Digital Living Network Alliance, but can also increase practicality of the Digital Living Network Alliance.

## Claims

1. A device (100, 200) for providing a real-time live video data stream file on request of a Universal Plug and Play (UPnP) client device (112), the device (100) **characterized by**:
a memory (104) for storing a first video file (1042);
a processor (106) for receiving a first access command generated by the client device (112) for accessing the first video file (1042), and converting an original real-time video data stream to a real-time video data stream file with a predetermined format according to the first access command; and
a buffer (108) for storing the real-time video data stream file temporarily, wherein the real-time video data stream file stored in the buffer (108) is provided to the client device (112) to access and play.

2. The device (100) of claim 1, further **characterized in that** the memory (104) further stores at least one second video file (1044), and the at least one second video file (1044) is a non-real-time multimedia file, wherein the processor (106) stores a video data file of the at least one second video file (1044) in the buffer (108) temporarily when the processor (106) receives the second access command for accessing the at least one second video file (1044) from the client device (112), wherein the video data file stored in the buffer (108) is provided to the client device (112) to access and play.

3. The device (100) of claim 1, further **characterized by**:
a peripheral device for storing at least one second video file (1044), wherein the at least one second video file (1044) is a non-real-time multimedia file;
wherein the processor (106) stores a video data file of the at least one second video file (1044) in the buffer (108) temporarily when the processor (106) receives a second access command for accessing the at least one second video file (1044) from the client device (112), wherein the video data file stored in the buffer (108) is provided to the client device (112) to access and play.

4. The device (200) of claim 1, further **characterized by**:
a remote controller (214) for generating and transmitting a trigger signal to the processor (106), wherein the processor (106) notifies the client device (112) to generate the first access command according to the trigger signal.

5. The device (100) of claim 2, further **characterized in that** the real-time video data stream file and/or the video data file of the at least one second video file (1044) is accessed by the client device (112) through a HyperText Transfer Protocol.

6. The device (100) of claim 1, further **characterized in that** the client device (112) is one of a tablet personal computer, a smart phone, a personal digital assistant, and a notebook computer which support a Digital Living Network Alliance.

7. A method for providing a real-time live video data stream file, the method for being provided to a device (100, 200) to implement, wherein the device (100) comprises a processor (106) and a buffer (108), the method **characterized by**:
the processor (106) receiving a first access command for accessing a first video file (1042) from a Universal Plug and Play client device (112); and
the processor (106) storing a real-time video data stream file with a predetermined format in the buffer (108) temporarily, wherein the real-time video data stream file stored in the buffer (108) is provided to the client device (112) to access and play.

8. The method of claim 7, further **characterized by**:
the processor (106) converting an original real-time video data stream to the real-time video data stream file with the predetermined format according to the first access command.

9. The method of claim 7, further **characterized by**:
the processor (106) receiving a second access command for accessing a
second video file (1044) from the client device (112); and
the processor (106) storing a video data file of the second video file (1044) in the buffer (108) temporarily, wherein the video data file stored in the buffer (108) is provided to the client device (112) to access and play.

10. The method of claim 9, further **characterized in that** the real-time video data stream file and/or the video data file of the second video file (1044) is accessed by the client device (112) through a HyperText Transfer Protocol.

11. The method of claim 7, further **characterized by**:
the processor (106) receiving a trigger signal generated and transmitted by a remote controller (214); and
the processor (106) notifying the Universal Plug and Play client device (112) to generate the first access command according to the trigger signal.
